# EUROPEAN PATENT APPLICATION

(11) **EP 4 738 958 A1**
(43) Date of publication of application: **06.05.2026**
(21) Application number: 23943028.3
(22) Date of filing: 30.06.2023
(51) Int. Cl.: H04W 72/0457

(54) **RESOURCE INDICATION METHOD AND APPARATUS, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Stöckeler, Ferdinand
(86) International application number: PCT/CN2023/105373
(87) International publication number: WO 2025/000536

(57) **Abstract**

Embodiments of the present disclosure disclose a resource indication method and apparatus. By means of receiving configuration information sent by a network device, the configuration information being used for configuring a UL BWP of a terminal and a UL subband of the terminal, receiving first indication information sent by the network device, the first indication information being used for indicating frequency domain resources used by the terminal for uplink transmission, and determining a target frequency domain resource on the basis of the first indication information and a frequency domain location of the UL subband, the target frequency domain resource being used by the terminal for the uplink transmission within the UL subband, the terminal can determine, on the basis of same indication information for allocation of frequency domain resources, a frequency domain resource scheduled for the uplink transmission within the UL subband, so that signaling resources can be effectively saved, the communication efficiency of the system is improved, and redundancy is reduced.

## Description

### TECHNICAL FIELD

The present disclosure relates to the field of communication technology, and specifically to a method and an apparatus for resource indication, a communication device, a communication system, and a storage medium.

### BACKGROUND

A base station may configure an uplink (UL) subband for UL data transmission within a downlink (DL) slot for a full duplex (FD) terminal, and may schedule the UL data transmission of the terminal within a time-frequency range of the UL subband. A size and a frequency domain location of the UL subband configured by the base station are generally different from a size and a frequency domain location of an active UL bandwidth part (BWP).

### SUMMARY

The embodiments of the present disclosure provide a method and an apparatus for resource indication, a communication device, a communication system, and a storage medium.

According to a first aspect of the embodiments of the present disclosure, a method for resource indication is provided. The method is performed by a terminal, and includes: receiving configuration information sent by a network device, in which the configuration information configures an uplink bandwidth part (UL BWP) of the terminal and an uplink (UL) subband of the terminal; receiving first indication information sent by the network device, in which the first indication information indicates a frequency domain resource used by the terminal for UL transmission; and determining a target frequency domain resource based on the first indication information and a frequency domain location of the UL subband, in which the target frequency domain resource is configured for the UL transmission of the terminal within the UL subband.

According to a second aspect of the embodiments of the present disclosure, a method for resource indication is provided. The method is performed by a network device, and includes: sending configuration information to a terminal, in which the configuration information configures a UL BWP of the terminal and a UL subband of the terminal; sending first indication information to the terminal, in which the first indication information indicates a frequency domain resource used by the terminal for UL transmission, in which the first indication information and a frequency domain location of the UL subband of the terminal are used by the terminal to determine a target frequency domain resource, and the target frequency domain resource is configured for the UL transmission of the terminal within the UL subband.

According to a third aspect of the embodiments of the present disclosure, a method for resource indication is provided, including: sending, by a network device, configuration information to a terminal, in which the configuration information configures a UL BWP of the terminal and a UL subband of the terminal; sending, by the network device, first indication information to the terminal, in which the first indication information indicates a frequency domain resource used by the terminal for UL transmission; and determining, by the terminal, a target frequency domain resource based on the first indication information and a frequency domain location of the UL subband, in which the target frequency domain resource is configured for the UL transmission of the terminal within the UL subband.

According to a fourth aspect of the embodiments of the present disclosure, a terminal is provided, including: a transceiver module, configured to receive configuration information sent by a network device, in which the configuration information configures a UL BWP of the terminal and a UL subband of the terminal; the transceiver module, further configured to receive first indication information sent by the network device, in which the first indication information indicates a frequency domain resource used by the terminal for UL transmission; and a processing module, configured to determine a target frequency domain resource based on the first indication information and a frequency domain location of the UL subband, in which the target frequency domain resource is configured for the UL transmission of the terminal within the UL subband.

According to a fifth aspect of the embodiments of the present disclosure, a network device is provided, including: a transceiver module, configured to send configuration information to a terminal, in which the configuration information configures a UL BWP of the terminal and a UL subband of the terminal; the transceiver module, further configured to send first indication information to the terminal, in which the first indication information indicates a frequency domain resource used by the terminal for UL transmission, in which the first indication information and a frequency domain location of the UL subband of the terminal are used by the terminal to determine a target frequency domain resource, and the target frequency domain resource is configured for the UL transmission of the terminal within the UL subband.

In the solution provided in the embodiments of the present disclosure, the configuration information sent by the network device is received, in which the configuration information configures the UL BWP of the terminal and the UL subband of the terminal; the first indication information sent by the network device is received, in which the first indication information indicates the frequency domain resource used by the terminal for the UL transmission; and the target frequency domain resource is determined based on the first indication information and the frequency domain location of the UL subband, in which the target frequency domain resource is configured for the UL transmission of the terminal within the UL subband, enabling the terminal to determine the frequency domain resource scheduled for the UL transmission in the UL subband based on the same indication information for frequency domain resource allocation, which may effectively save signaling resources, improve communication efficiency of the system, and reduce redundancy.

### BRIEF DESCRIPTION OF THE DRAWINGS

In order to more clearly illustrate the technical solution in the embodiments of the disclosure or the background, the accompanying drawings to be used in the embodiments of the disclosure or the background will be described below.
FIG. 1A is a schematic diagram of an architecture of a communication system according to an embodiment of the present disclosure.
FIG. 1B is a schematic diagram of frequency domain locations of an uplink (UL) subband and a UL bandwidth part (BWP) according to an embodiment of the present disclosure.
FIG. 1C is another schematic diagram of frequency domain locations of a UL subband and a UL BWP according to an embodiment of the present disclosure.
FIG. 2 is a schematic diagram of interaction of a method for resource indication according to an embodiment of the present disclosure.
FIG. 3A is a flowchart of a method for resource indication according to an embodiment of the present disclosure.
FIG. 3B is a flowchart of a method for resource indication according to an embodiment of the present disclosure.
FIG. 3C is a flowchart of a method for resource indication according to an embodiment of the present disclosure.
FIG. 4A is a flowchart of a method for resource indication according to an embodiment of the present disclosure.
FIG. 4B is a flowchart of a method for resource indication according to an embodiment of the present disclosure.
FIG. 4C is a flowchart of a method for resource indication according to an embodiment of the present disclosure.
FIG. 5 is a flowchart of a method for resource indication according to an embodiment of the present disclosure.
FIG. 6A is a schematic diagram of a full duplex (FD) resource configuration according to an embodiment of the present disclosure.
FIG. 6B is a schematic diagram of a configuration of a DL BWP and a UL BWP according to an embodiment of the present disclosure.
FIG. 6C is a schematic diagram of frequency domain resource allocation according to an embodiment of the present disclosure.
FIG. 6D is another schematic diagram of frequency domain resource allocation according to an embodiment of the present disclosure.
FIG. 7A is a block diagram of a terminal according to an embodiment of the present disclosure.
FIG. 7B is a block diagram of a network device according to an embodiment of the present disclosure.
FIG. 8A is a block diagram of a communication device according to an embodiment of the present disclosure.
FIG. 8B is a block diagram of a chip according to an embodiment of the present disclosure.

### DETAILED DESCRIPTION

The embodiments of the present disclosure provide a method and an apparatus for resource indication, a communication device, a communication system, and a storage medium.

According to a first aspect, the embodiments of the present disclosure provide a method for resource indication. The method is performed by a terminal, and includes: receiving configuration information sent by a network device, in which the configuration information configures an uplink bandwidth part (UL BWP) of the terminal and an uplink (UL) subband of the terminal; receiving first indication information sent by the network device, in which the first indication information indicates a frequency domain resource used by the terminal for UL transmission; and determining a target frequency domain resource based on the first indication information and a frequency domain location of the UL subband, in which the target frequency domain resource is configured for the UL transmission of the terminal within the UL subband.

In the above embodiment, the terminal may determine the frequency domain resource scheduled for the UL transmission in the UL subband based on the same indication information for frequency domain resource allocation, which may effectively save signaling resources, improve communication efficiency of the system, and reduce redundancy.

In combination with some embodiments of the first aspect, in some embodiments, a length of the first indication information is determined according to an active UL BWP; or a length of the first indication information is determined according to an initial UL BWP.

In the above embodiment, the length of the first indication information has a determined size and does not change due to different slot types where scheduled UL transmission is located, which may effectively save resources for the scheduling signaling and reduce redundancy.

In combination with some embodiments of the first aspect, in some embodiments, the first indication information indicates a position of a starting frequency domain resource unit of the frequency domain resource for the UL transmission within the UL BWP, and a numerical count of frequency domain resource units occupied by the frequency domain resource for the UL transmission; and the target frequency domain resource is a frequency domain resource where the frequency domain resource for the UL transmission indicated by the first indication information overlaps with the UL subband of the terminal.

In the above embodiment, the terminal may determine the frequency domain resource scheduled for the UL transmission in the UL subband based on the same indication information for frequency domain resource allocation, which may effectively save signaling resources, improve communication efficiency of the system, and reduce redundancy.

In combination with some embodiments of the first aspect, in some embodiments, the first indication information indicates a position of a starting frequency domain resource unit of the frequency domain resource for the UL transmission within the UL subband, and a numerical count of frequency domain resource units occupied by the frequency domain resource for the UL transmission; and the target frequency domain resource is a frequency domain resource where the frequency domain resource for the UL transmission indicated by the first indication information overlaps with the UL subband of the terminal.

In the above embodiment, the terminal may determine the frequency domain resource scheduled for the UL transmission in the UL subband based on the same indication information for frequency domain resource allocation, which may effectively save signaling resources, improve communication efficiency of the system, and reduce redundancy.

In combination with some embodiments of the first aspect, in some embodiments, the first indication information is a resource indicate value (RIV).

In the above embodiment, reusing an existing method of frequency domain resource indication improves universality of the method.

In combination with some embodiments of the first aspect, in some embodiments, the first indication information is included in downlink control information (DCI).

In the above embodiment, reusing an existing signaling of frequency domain resource scheduling may effectively save signaling resources, improve communication efficiency of the system, and reduce redundancy.

In combination with some embodiments of the first aspect, in some embodiments, a resource allocation type for the UL transmission is a first type.

In the above embodiment, reusing an existing method of frequency domain resource indication improves universality of the method.

In combination with some embodiments of the first aspect, in some embodiments, the UL subband is located within a subband full duplex (SBFD) slot.

In the above embodiment, the terminal may use the same frequency domain resource indication information to determine the frequency domain resource scheduled for the UL transmission in the UL subband within the SBFD slot, which adapts to enhanced new scenarios.

According to a second aspect, the embodiments of the present disclosure provide a method for resource indication. The method is performed by a network device, including: sending configuration information to a terminal, in which the configuration information configures a UL BWP of the terminal and a UL subband of the terminal; sending first indication information to the terminal, in which the first indication information indicates a frequency domain resource used by the terminal for UL transmission, in which the first indication information and a frequency domain location of the UL subband of the terminal are used by the terminal to determine a target frequency domain resource, and the target frequency domain resource is configured for the UL transmission of the terminal within the UL subband.

In the above embodiment, the terminal may determine the frequency domain resource scheduled for the UL transmission in the UL subband based on the same indication information for frequency domain resource allocation, which may effectively save signaling resources, improve communication efficiency of the system, and reduce redundancy.

In combination with some embodiments of the second aspect, in some embodiments, a length of the first indication information is determined according to an active UL BWP; or a length of the first indication information is determined according to an initial UL BWP.

In combination with some embodiments of the second aspect, in some embodiments, the first indication information indicates a position of a starting frequency domain resource unit of the frequency domain resource for the UL transmission within the UL BWP, and a numerical count of frequency domain resource units occupied by the frequency domain resource for the UL transmission; and the target frequency domain resource is a frequency domain resource where the frequency domain resource for the UL transmission indicated by the first indication information overlaps with the UL subband of the terminal.

In combination with some embodiments of the second aspect, in some embodiments, the first indication information indicates a position of a starting frequency domain resource unit of the frequency domain resource for the UL transmission within the UL subband, and a numerical count of frequency domain resource units occupied by the frequency domain resource for the UL transmission; and the target frequency domain resource is a frequency domain resource where the frequency domain resource for the UL transmission indicated by the first indication information overlaps with the UL subband of the terminal.

In combination with some embodiments of the second aspect, in some embodiments, the first indication information is an RIV.

In combination with some embodiments of the second aspect, in some embodiments, the first indication information is included in DCI.

In combination with some embodiments of the second aspect, in some embodiments, a resource allocation type for the UL transmission is a first type.

In combination with some embodiments of the second aspect, in some embodiments, the UL subband is located within an SBFD slot.

According to a third aspect, the embodiments of the present disclosure provide a method for resource indication, including: sending, by a network device, configuration information to a terminal, in which the configuration information configures a UL BWP of the terminal and a UL subband of the terminal; sending, by the network device, first indication information to the terminal, in which the first indication information indicates a frequency domain resource used by the terminal for UL transmission; and determining, by the terminal, a target frequency domain resource based on the first indication information and a frequency domain location of the UL subband, in which the target frequency domain resource is configured for the UL transmission of the terminal within the UL subband.

In the above embodiment, the terminal may determine the frequency domain resource scheduled for the UL transmission in the UL subband based on the same indication information for frequency domain resource allocation, which may effectively save signaling resources, improve communication efficiency of the system, and reduce redundancy.

In combination with some embodiments of the third aspect, in some embodiments, a length of the first indication information is determined according to an active UL BWP; or a length of the first indication information is determined according to an initial UL BWP.

In combination with some embodiments of the third aspect, in some embodiments, the first indication information indicates a position of a starting frequency domain resource unit of the frequency domain resource for the UL transmission within the UL BWP, and a numerical count of frequency domain resource units occupied by the frequency domain resource for the UL transmission; and the target frequency domain resource is a frequency domain resource where the frequency domain resource for the UL transmission indicated by the first indication information overlaps with the UL subband of the terminal.

In combination with some embodiments of the third aspect, in some embodiments, the first indication information indicates a position of a starting frequency domain resource unit of the frequency domain resource for the UL transmission within the UL subband, and a numerical count of frequency domain resource units occupied by the frequency domain resource for the UL transmission; and the target frequency domain resource is a frequency domain resource where the frequency domain resource for the UL transmission indicated by the first indication information overlaps with the UL subband of the terminal.

In combination with some embodiments of the third aspect, in some embodiments, the first indication information is an RIV.

In combination with some embodiments of the third aspect, in some embodiments, the first indication information is included in DCI.

In combination with some embodiments of the third aspect, in some embodiments, a resource allocation type for the UL transmission is a first type.

In combination with some embodiments of the third aspect, in some embodiments, the UL subband is located within an SBFD slot.

According to a fourth aspect of the embodiments of the present disclosure, a terminal is provided. The terminal includes at least one of a transceiver module or a processing module, in which the terminal is configured to perform the first aspect and the implementations of the first aspect.

According to a fifth aspect of the embodiments of the present disclosure, a network device is provided. The network device includes at least one of a transceiver module or a processing module, in which the network device is configured to perform the second aspect and the implementations of the second aspect.

According to a sixth aspect of the embodiments of the present disclosure, a terminal is provided. The terminal includes one or more processors, in which the terminal is configured to perform the first aspect and the implementations of the first aspect.

According to a seventh aspect of the embodiments of the present disclosure, a network device is provided. The network device includes one or more processors, in which the network device is configured to perform the second aspect and the implementations of the second aspect.

According to an eighth aspect of the embodiments of the present disclosure, a communication system is provided. The system includes: a terminal and a network device, in which the terminal is configured to perform the method as described in the first aspect and the implementations of the first aspect, and the network device is configured to perform the method as described in the second aspect and the implementations of the second aspect.

According to a ninth aspect of the embodiments of the present disclosure, a storage medium for storing instructions is provided. When the instructions are running on a communication device, the communication device is caused to perform the method as described in the first aspect and the implementations of the first aspect, and the second aspect and the implementations of the second aspect.

According to a tenth aspect of the embodiments of the present disclosure, a program product is provided. When the program product is executed by a communication device, the communication device is caused to perform the method as described in the first aspect and the implementations of the first aspect, and the method as described in the second aspect and the implementations of the second aspect.

According to an eleventh aspect of the embodiments of the present disclosure, a computer program is provided. When the computer program is running on a computer, the computer is caused to perform the method as described in the first aspect and the implementations of the first aspect, and the method as described in the second aspect and the implementations of the second aspect.

According to a twelfth aspect, the embodiments of the present disclosure provide a chip or a chip system. The chip or the chip system includes processing circuits, configured to perform the method described in the first aspect and the implementations of the first aspect, and the method described in the second aspect and the implementations of the second aspect.

It may be understood that the terminal, the network device, the communication system, the storage medium, the program product, the computer program, and the chip or the chip system are all used to perform the methods provided in the embodiments of the present disclosure. Therefore, for beneficial effects they may achieve reference may be made to the beneficial effects in the corresponding method, and details will not be repeated here.

The embodiments of the present disclosure provide a method and an apparatus for resource indication, a communication device, a communication system, and a storage medium. In some embodiments, the term "method for resource indication" may be interchanged with terms such as "method for processing information", "communication method", etc., the term "apparatus for resource indication" may be interchanged with terms such as "apparatus for processing information", "communication apparatus", etc., and the term "system for information indication" may be interchanged with terms such as "communication system", etc.

The embodiments of the present disclosure are not exhaustive and only serve as illustrations of some embodiments, but not as specific limitations to the protection scope of the present disclosure. Without conflict, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, implementations in an embodiment may be arbitrarily combined. Furthermore, different embodiments may be arbitrarily combined. For example, some or all steps of different embodiments may be arbitrarily combined, and an embodiment may be arbitrarily combined with implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in the embodiments of the present disclosure are for a purpose of describing specific embodiments only and are not intended to limit the present disclosure.

In the embodiments of the present disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In the embodiments of the present disclosure, "a plurality of" means two or more.

In some embodiments, terms such as "at least one of", "one or more", "a plurality of", "multiple", etc. may be used interchangeably.

In some embodiments, expressions such as "at least one of A or B", "A and/or B", "in a case A, in another case B", and "in response to a case A, in response to another case B" in the present disclosure, depending on situations, may include the following solutions: performing A in some implementations (performing A independently of B); performing B in some implementations (performing B independently of A); selecting one of A or B for execution in some implementations (selectively performing A or B); and performing A and B in some implementations (performing A and B). The similar principle applies when there are more parts such as A, B, C, etc.

In some embodiments, expressions such as "A or B", depending on situations, may include the following technical solutions: performing A in some implementations (performing A independently of B); performing B in some implementations (performing B independently of A); and selecting one of A or B for execution in some implementations (selectively performing A or B). The similar principle applies when there are more parts such as A, B, C, etc.

The terms such as "first" and "second" added in front of other words in the embodiments of the present disclosure are used solely to distinguish different described objects and do not limit a position, a sequence, a priority, a quantity, or content of the described objects. For a statement regarding the described object, reference may be made to claims or descriptions in the context of embodiments and should not constitute other restrictions due to the use of the above terms in front of other words. For example, if the described object is "field", ordinal numbers before the "field" in "first field" and "second field" do not limit a position or a sequence between fields. "First" and "second" do not limit whether modified "fields" are in the same message, nor do an order of the "first field" and the "second field." For another example, if the described object is "level", ordinal numbers before the "level" in "first level" and "second level" do not limit a priority between levels. Furthermore, a quantity of described objects is not limited by the ordinal numbers, which may be one or more. Taking "first apparatus" as an example, there may be one or more "apparatus". In addition, objects modified by different words may be the same or different. For example, if the described object is an "apparatus", "first apparatus" and "second apparatus" may be the same apparatus or different apparatuses, and their types may be the same or different. Similarly, if the described object is "information", "first information" and "second information" may be same information or different information, and their content may be the same or different.

In some embodiments, "including A", "comprising A", "configured to indicate A", or "carrying A" may be interpreted as directly carrying A or indirectly indicating A.

In some embodiments, terms such as "in response to...", "in response to determining...", "in a case that...", "when...", "if..." etc. may be used interchangeably.

In some embodiments, terms such as "greater than", "greater than or equal to", "not less than", "more than", "more than or equal to", "no less than", "higher than", "higher than or equal to", "not lower than", "above", etc. may be used interchangeably. Terms such as "less than", "less than or equal to", "not greater than", "fewer than", "fewer than or equal to", "no more than", "lower than", "lower than or equal to", "not higher than", "below" etc. may also be used interchangeably.

In some embodiments, "apparatus/device" may be interpreted as either a physical apparatus or a virtual apparatus. Names are not limited to those recorded in the embodiments. Terms such as "equipment", "device", "circuit", "network element", "node", "function", "unit", "section", "system", "network", "chip", "chip system", "entity", "subject", etc.

In some embodiments, "network" may be interpreted as a device included in the network, such as an access network device, a core network device, etc.

In some embodiments, "access network device (AN device)" may also be called "radio access network device (RAN device)", "base station (BS)", "radio base station", "fixed station"; and in some embodiments, the AN device may also be called "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc.

In some embodiments, "terminal" or "terminal device" may be called "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc.

In some embodiments, obtaining data, information, etc. shall comply with laws and regulations of a country where it is located.

In some embodiments, data, information, etc. may be obtained after agreed by a user.

In addition, each element, each row, or each column in tables of the embodiments of the present disclosure may be implemented as an independent embodiment. Any combination of elements, rows, or columns may also be implemented as an independent embodiment.

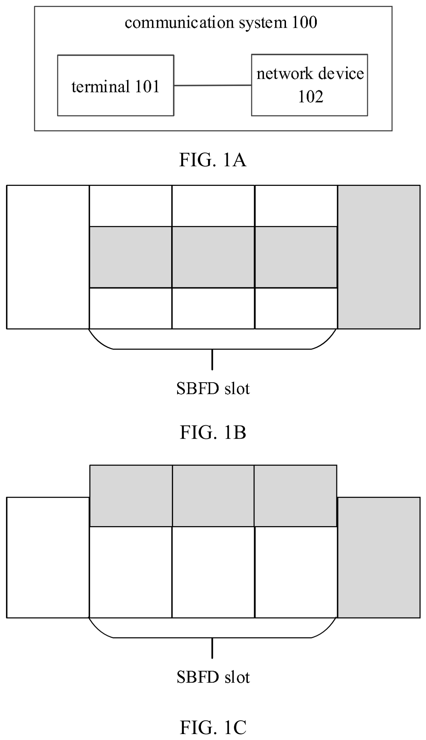

FIG. 1A is a schematic diagram of an architecture of a communication system 100 according to the embodiments of the present disclosure.

As shown in FIG. 1A, the communication system 100 may include a terminal 101 and a network device 102.

In some embodiments, the terminal 101 includes, for example, at least one of a mobile phone, a wearable device, an Internet of Things device, or a car, a smart car, and a Pad, with a communication function, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited thereto.

In some embodiments, the access network device 102 is, for example, a node or device that connects the terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (WiFi) system, which is not limited thereto.

In some embodiments, the technical solution of the present disclosure may be applied to an architecture of the Open RAN. In this case, an interface between access network devices or within the access network device in the embodiments of the present disclosure may become an internal interface of the Open RAN. Processes and information interaction may be implemented via software or programs.

In some embodiments, the access network device may be composed of a central unit (CU) and distributed units (DUs). The CU may also be referred to as a control unit. The use of CU-DU structure allows to divide a protocol layer of the access network device, such that some of the protocol layer functions are placed in the CU for centralized control, and some or all of the remaining protocol layer functions are distributed in the DUs, and the DUs are centrally controlled by the CU, which is not limited to these.

It may be understood that the communication system in the embodiments of the present disclosure is to clearly illustrate the technical solution of the embodiments of the present disclosure, and does not constitute a limitation on the technical solution in the embodiments of the present disclosure. Those skilled in the art may know, with evolution of the system architecture and emergence of new service scenarios, the technical solution in the embodiments of the disclosure is also applicable to similar technical problems.

The following embodiments of the present disclosure are applicable to the communication system 100 shown in FIG. 1A, or to some entities, which are not limited here. The entities in FIG. 1A are illustrative. The communication system may include all or some of the entities in FIG. 1A, or may include other entities not shown in FIG. 1A. The entities may be in any number and in any form. Connection relationships between the entities are illustrative. The entities may be unconnected or may be connected. They may be connected in any manner, for example, they may be directly connected or indirectly connected, or may be connected via a wired or wireless way.

The embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them, etc. In addition, a combination of a plurality of systems (e.g., a combination of LTE or LTE-A with 5G) may be applied.

In a project for further research on a full duplex (FD) scheme, it is proposed that a network side may simultaneously send and receive data within one slot. A base station may configure a UL subband for UL data transmission within a downlink (DL) slot for an FD terminal, and schedule the UL data transmission of the terminal within a time-frequency range of the UL subband. A size and a frequency domain location of the UL subband configured by the base station are generally different from a size and a frequency domain location of an active UL bandwidth part (BWP). For example, FIG. 1B and FIG. 1C are schematic diagrams of frequency domain locations of the UL subband and the UL BWP. In the example shown in FIG. 1B, the UL subband within the SBFD slot is completely included in a frequency domain range of the UL BWP; and in the example shown in FIG. 1C, the UL subband within the SBFD slot is not completely included in a frequency domain range of the UL BWP.

The base station may indicate a frequency domain resource occupied by UL data channel transmission via a frequency domain resource assignment (FDRA) field included in DCI, in which the FDRA field indicates a frequency domain resource in the UL BWP.

Because the UL subband and the UL BWP are not necessarily aligned in the frequency domain, when UL transmission is performed on different slots, if the slots include an SBFD slot and a non-SBFD slot, their available frequency domain resources are different. How to indicate the UL frequency domain resources on different slots via the same frequency domain resource indication information is a problem that needs to be solved.

The method and the apparatus for resource indication provided by the present disclosure are described in detail below with reference to the accompanying drawings.

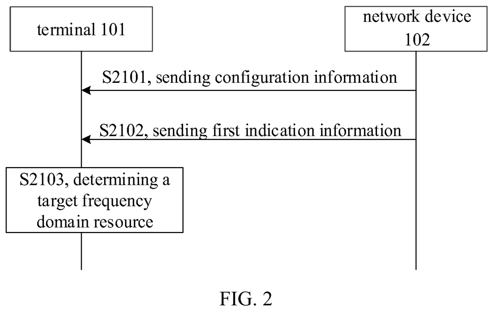

FIG. 2 is a schematic diagram of interaction of a method for resource indication according to an embodiment of the present disclosure. As shown in FIG. 2, an embodiment of the present disclosure relates to the method for resource indication, and the method includes steps of S2101 to S2103.

At S2101, a network device 102 sends configuration information to a terminal 101.

In some embodiments, the terminal 101 receives the configuration information sent by the network device 102.

In some embodiments, the configuration information configures a UL BWP of the terminal.

In some embodiments, the configuration information configures a UL subband of the terminal.

In some embodiments, a name of the configuration information is not limited, and it may be, for example, "UL-DL configuration", "UL frequency domain configuration", and so on.

In some embodiments, the configuration information may also be used for a DL BWP of the terminal.

In some embodiments, the configuration information includes at least one of a frequency domain resource start position, a frequency domain resource center position, or a frequency domain resource length.

In some embodiments, S2101 may be omitted, and the terminal 101 may autonomously implement the function indicated by the configuration information. For example, the terminal may obtain the UL BWP and/or the UL subband without receiving the configuration information, or the above function may be default or pre-configured.

In some embodiments, the UL subband is located within an SBFD slot.

At S2102, the network device 102 sends first indication information to the terminal 101.

In some embodiments, the terminal 101 receives the first indication information sent by the network device 102.

In some embodiments, the first indication information indicates a frequency domain resource used by the terminal for UL transmission 101.

In some embodiments, a name of the first indication information is not limited, and it may be, for example, "resource indicate value (RIV)", "frequency domain resource assignment (FDRA)", "frequency domain resource indication", and so on.

In some embodiments, the first indication information may be indicated by means of the RIV. That is, the terminal may determine two values, S and L according to the first indication information, in which S represents a start position of the frequency domain resource, and L represents a length of the frequency domain resource.

In some embodiments, the length of the first indication information is determined according to an active UL BWP.

In an implementation, the active UL BWP may be determined by the terminal according to the configuration information sent by the network device.

In some embodiments, a length of the first indication information is determined according to an initial UL BWP.

In an implementation, the initial UL BWP may be determined by the terminal according to the configuration information sent by the network device.

In some embodiments, the first indication information indicates a position of a starting frequency domain resource unit of the frequency domain resource within the UL BWP, and a numerical count of frequency domain resource units occupied by the frequency domain resource.

As an example, the terminal determines S value as m1 and L value as m2 based on the first indication information, that is, the starting frequency domain resource unit of the frequency domain resource indicated by the first indication information is a frequency domain resource unit numbered m1 within the frequency domain range of the UL BWP, and the frequency domain resource occupies m2 frequency domain resource units, meaning the frequency domain resource indicated by the first indication information includes frequency domain resource units numbered m1~(m1+m2-1) within the frequency domain range of the UL BWP.

In some embodiments, the first indication information indicates a position of a starting frequency domain resource unit of the frequency domain resource within the UL subband, and a numerical count of frequency domain resource units occupied by the frequency domain resource.

As an example, the terminal determines S value as m1 and L value as m2 based on the first indication information, that is, the starting frequency domain resource unit of the frequency domain resource indicated by the first indication information is a frequency domain resource unit numbered m1 within the frequency domain range of the UL subband, and the frequency domain resource occupies m2 frequency domain resource units.

In an implementation, in various embodiments of the present disclosure, the frequency domain resource unit may be a virtual resource block (VRB), or a VRB group.

In some embodiments, the first indication information may be included in DCI.

In an implementation, the DCI may be DCI format 0-0, DCI format 0-1, DCI format 0-2, DCI format 0-3, or any other DCI used for scheduling the UL transmission.

In some embodiments, the first indication information is used for UL transmission with a resource assignment (RA) type of RA type 1.

At S2103, the terminal 101 determines a target frequency domain resource.

In some embodiments, the terminal 101 may determine the target frequency domain resource based on the frequency domain resource indicated by the first indication information and a determined frequency domain location of the UL subband.

In some embodiments, the target frequency domain resource is used for the UL transmission of the terminal within the UL subband.

In some embodiments, the target frequency domain resource is a frequency domain resource used for UL transmission scheduled by a network within the UL subband.

In some embodiments, the target frequency domain resource determined by the terminal is a frequency domain resource where the frequency domain resource indicated by the first indication information in the preceding step overlaps with the UL subband.

In an implementation, the first indication information indicates the position of the starting frequency domain resource unit of the frequency domain resource for the UL transmission within the UL BWP, and the numerical count of frequency domain resource units occupied by the frequency domain resource for the UL transmission; and the target frequency domain resource determined by the terminal is a frequency domain resource where the frequency domain resource for the UL transmission indicated by the first indication information overlaps with the UL subband.

In an implementation, the first indication information indicates the position of the starting frequency domain resource unit of the frequency domain resource for the UL transmission within the UL subband, and the numerical count of frequency domain resource units occupied by the frequency domain resource for the UL transmission; and the target frequency domain resource determined by the terminal is a frequency domain resource where the frequency domain resource for the UL transmission indicated by the first indication information overlaps with the UL subband.

In some embodiments, the UL subband is located within an SBFD slot, meaning that the scheduled UL transmission is located within the UL subband in the frequency domain and located within the SBFD slot in the time domain.

In some embodiments, names of information and other elements are not limited to those specified in the embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program", "chip", etc., may be used interchangeably.

In some embodiments, names of information and other elements are not limited to those specified in the embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program", "chip", etc., may be used interchangeably.

In some embodiments, terms such as "physical downlink shared channel (PDSCH)", "DL data", etc. may be used interchangeably; and terms such as "physical uplink shared channel (PUSCH)", "UL data", etc. may be used interchangeably.

In some embodiments, terms such as "radio", "wireless", "radio access network (RAN)", "access network (AN)", "RAN-based", etc. may be used interchangeably.

In some embodiments, terms such as "resource block (RB)", "physical resource block (PRB)", "sub-carrier group (SCG)", "resource element group (REG)", "PRB pair", "RB pair", "resource element (RE)", "sub-carrier", etc. may be used interchangeably.

In some embodiments, terms such as "frame", "radio frame", "subframe", "slot", "sub-slot", "mini-slot", "symbol", "transmission time interval (TTI)", etc. may be used interchangeably.

In some embodiments, "acquire", "obtain", "get", "receive", "transmit", "bidirectional transmission", "send and/or receive" may be used interchangeably, and they may be interpreted as receiving from another entity, obtaining from a protocol, obtaining via processing by itself, autonomously implementing, and other meanings.

In some embodiments, terms such as "send", "emit", "report", "downlink", "transmit", "bidirectional transmission", "send and/or receive" may be used interchangeably.

The communication method involved in the embodiments of the present disclosure may include at least one of S2101 to S2103. For example, S2103 may be implemented as an independent embodiment, a combination of S2102 and S2103 may be implemented as an independent embodiment, and a combination of S2101, S2102, and S2103 may be implemented as an independent embodiment, and so on, but it is not limited thereto.

In some embodiments, S2101 may be performed, and one or more of these steps may be omitted or substituted in different embodiments.

In some embodiments, reference may be made to other implementations described before or after the description corresponding to FIG. 2.

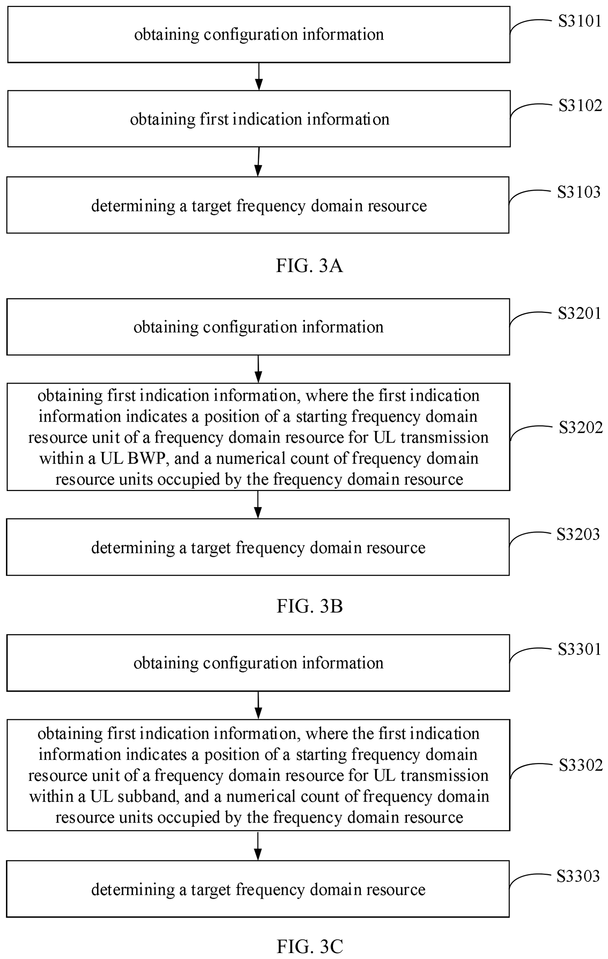

FIG. 3A is a flowchart of a method for resource indication according to an embodiment of the present disclosure. As shown in FIG. 3A, an embodiment of the present disclosure relates to the method for resource indication. The above method is performed by the terminal 101, and includes steps of S3101 to S3103.

At S3101, configuration information is obtained.

For implementations of S3101, reference may be made to the implementations of S2101 in FIG. 2 and other related parts in the embodiments related to FIG. 2, which will not be repeated here.

In some embodiments, the terminal 101 receives configuration information sent by the network device 102, but it is not limited thereto, and may also receive the configuration information sent by another entity.

In some embodiments, the terminal 101 obtains configuration information specified by a protocol.

In some embodiments, the terminal 101 obtains configuration information from an upper layer(s).

In some embodiments, the terminal 101 obtains configuration information by performing processing.

In some embodiments, S3101 is omitted, and the terminal 101 autonomously performs a function indicated by the configuration information, or the above function is default or preconfigured.

At S3102, first indication information is obtained.

For implementations of S3102, reference may be made to the implementations of S2102 in FIG. 2 and other related parts in the embodiments related to FIG. 2, which will not be repeated here.

In some embodiments, the terminal 101 receives first indication information sent by the network device 102, but it is not limited thereto, and may also receive the first indication information sent by another entity.

At S3103, a target frequency domain resource is determined.

For implementations of S3103, reference may be made to the implementations of S2103 in FIG. 2 and other related parts in the embodiments related to FIG. 2, which will not be repeated here.

The communication method involved in the embodiments of the present disclosure may include at least one of S3101 to S3103. For example, S3103 may be implemented as an independent embodiment, a combination of S3102 and S3103 may be implemented as an independent embodiment, a combination of S3101, S3102, and S3103 may be implemented as an independent embodiment, and so on, but it is not limited thereto.

In some embodiments, S3101 may be performed, and one or more of these steps may be omitted or substituted in different embodiments.

FIG. 3B is a flowchart of a method for resource indication according to an embodiment of the present disclosure. As shown in FIG. 3B, an embodiment of the present disclosure relates to the method for resource indication. The above method is performed by the terminal 101, and includes steps of S3201 to S3203.

At S3201, configuration information is obtained.

For implementations of S3201, reference may be made to the implementations of S2101 in FIG. 2, the implementations of S3101 in FIG. 3A, and other related parts in the embodiments related to FIG. 2 and FIG. 3A, which will not be repeated here.

At S3202, first indication information is obtained, in which the first indication information indicates a position of a starting frequency domain resource unit of a frequency domain resource for UL transmission within a UL BWP, and a numerical count of frequency domain resource units occupied by the frequency domain resource.

For implementations of S3202, reference may be made to the implementations of S2102 in FIG. 2, the implementations of S3102 in FIG. 3A, and other related parts in the embodiments related to FIG. 2 and FIG. 3A, which will not be repeated here.

In some embodiments, the terminal 101 receives first indication information sent by a network device 102, but it is not limited thereto, and may also receive first indication information sent by another entity.

At S3203, a target frequency domain resource is determined.

For implementations of S3203, reference may be made to the implementations of S2103 in FIG. 2, the implementations of S3103 in FIG. 3A, and other related parts in the embodiments related to FIG. 2 and FIG. 3A, which will not be repeated here.

The communication method involved in the embodiments of the present disclosure may include at least one of S3201 to S3203. For example, S3203 may be implemented as an independent embodiment, a combination of S3202 and S3203 may be implemented as an independent embodiment, a combination of S3201, S3202, and S3203 may be implemented as an independent embodiment, and so on, but it is not limited thereto.

In some embodiments, S3201 may be performed, and one or more of these steps may be omitted or substituted in different embodiments.

FIG. 3C is a flowchart of a method for resource indication according to an embodiment of the present disclosure. As shown in FIG. 3C, an embodiment of the present disclosure relates to the method for resource indication. The above method is performed by the terminal 101, and includes steps of S3301 to S3303.

At S3301, configuration information is obtained.

For implementations of S3301, reference may be made to the implementations of S2101 in FIG. 2, the implementations of S3101 in FIG. 3A, and other related parts in the embodiments related to FIG. 2 and FIG. 3A, which will not be repeated here.

At S3302, first indication information is obtained, in which the first indication information indicates a position of a starting frequency domain resource unit of a frequency domain resource for UL transmission within a UL subband, and a numerical count of frequency domain resource units occupied by the frequency domain resource.

For implementations of S3302, reference may be made to the implementations of S2102 in FIG. 2, the implementations of S3102 in FIG. 3A, and other related parts in the embodiments related to FIG. 2 and FIG. 3A, which will not be repeated here.

In some embodiments, the terminal 101 receives first indication information sent by the network device 102, but it is not limited thereto, and may also receive the first indication information sent by another entity.

At S3303, a target frequency domain resource is determined.

For implementations of S3303, reference may be made to the implementations of S2103 in FIG. 2, the implementations of S3103 in FIG. 3A, and other related parts in the embodiments related to FIG. 2 and FIG. 3A, which will not be repeated here.

The communication method involved in the embodiments of the present disclosure may include at least one of S3301 to S3303. For example, S3303 may be implemented as an independent embodiment, a combination of S3302 and S3303 may be implemented as an independent embodiment, a combination of S3301, S3302, and S3303 may be implemented as an independent embodiment, and so on, but it is not limited thereto.

In some embodiments, S3301 may be performed, and one or more of these steps may be omitted or substituted in different embodiments.

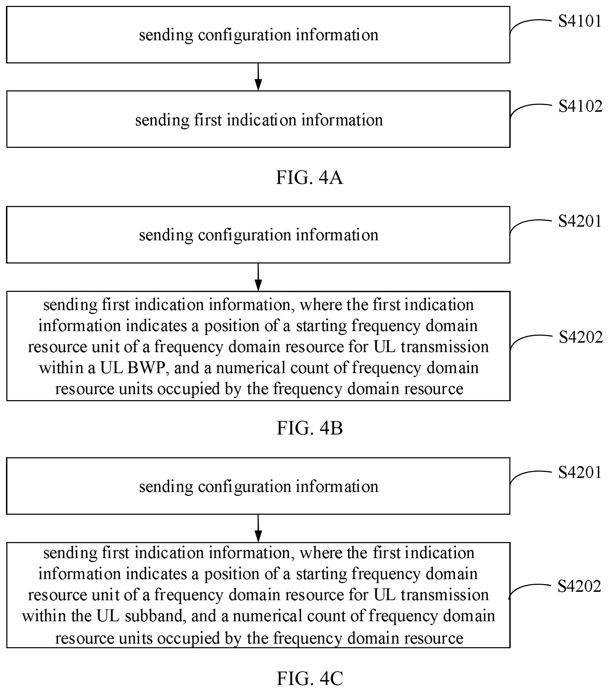

FIG. 4A is a flowchart of a method for resource indication according to an embodiment of the present disclosure. As shown in FIG. 4A, an embodiment of the present disclosure relates to the method for resource indication. The above method is performed by the network device 102, and includes steps of S4101 to S4102.

At S4101, configuration information is sent.

For implementations of S4101, reference may be made to the implementations of S2101 in FIG. 2 and other related parts in the embodiments related to FIG. 2, which will not be repeated here.

In some embodiments, the network device 102 sends the configuration information to the terminal 101, but it is not limited thereto, and may also send the configuration information to another entity.

In an implementation, the configuration information is used for the terminal 101 to determine a UL BWP and a UL subband.

At S4102, first indication information is sent.

For implementations of S4102, reference may be made to the implementations of S2102 in FIG. 2 and other related parts in the embodiments related to FIG. 2, which will not be repeated here.

In some embodiments, the network device 102 sends the first indication information to the terminal 101, but it is not limited thereto, and may also send the first indication information to another entity.

In an implementation, the first indication information is used for the terminal 101 to determine a target frequency domain resource based on a frequency domain resource indicated by the first indication information and a frequency domain location of the UL subband. For implementations thereof, reference may be made to the implementations of S2103 in FIG. 2 and other related parts in the embodiments related to FIG. 2, which will not be repeated here.

The communication method involved in the embodiments of the present disclosure may include at least one of S4101 to S4102. For example, S4102 may be implemented as an independent embodiment, a combination of S4101 and S4102 may be implemented as an independent embodiment, and so on, but it is not limited thereto.

In some embodiments, S4101 may be performed, and one or more of these steps may be omitted or substituted in different embodiments.

FIG. 4B is a flowchart of a method for resource indication according to an embodiment of the present disclosure. As shown in FIG. 4B, an embodiment of the present disclosure relates to the method for resource indication. The above method is performed by a network device 102, and includes S4201 to S4202.

At S4201, configuration information is sent.

For implementations of S4201, reference may be made to the implementations of S2101 in FIG. 2, the implementations of S4101 in FIG. 4A, and other related parts in the embodiments related to FIG. 2 and FIG. 4A, which will not be repeated here.

At S4202, first indication information is sent, in which the first indication information indicates a position of a starting frequency domain resource unit of a frequency domain resource for UL transmission within a UL BWP, and a numerical count of frequency domain resource units occupied by the frequency domain resource.

For implementations of S4202, reference may be made to the implementations of S2102 in FIG. 2, the implementations of S4102 in FIG. 4A, and other related parts in the embodiments related to FIG. 2 and FIG. 4A, which will not be repeated here.

In some embodiments, the network device 102 sends the first indication information to the terminal 101, but it is not limited thereto, and may also send the first indication information to another entity.

In an implementation, the first indication information is used for the terminal 101 to determine a target frequency domain resource based on the frequency domain resource indicated by the first indication information and a frequency domain location of the UL subband. For implementations thereof, reference may be made to the implementations of S2103 in FIG. 2 and other related parts in the embodiments related to FIG. 2, which will not be repeated here.

The communication method involved in the embodiments of the present disclosure may include at least one of S4201 to S4202. For example, S4202 may be implemented as an independent embodiment, a combination of S4201 and S4202 may be implemented as an independent embodiment, and so on, but it is not limited thereto.

In some embodiments, S4201 may be performed, and one or more of these steps may be omitted or substituted in different embodiments.

FIG. 4C is a flowchart of a method for resource indication according to an embodiment of the present disclosure. As shown in FIG. 4C, an embodiment of the present disclosure relates to the method for resource indication. The above method is performed by a network device 102, and includes steps of S4301 to S4302.

At S4301, configuration information is sent.

For implementations of S4301, reference may be made to the implementations of S2101 in FIG. 2, the implementations of S4101 in FIG. 4A, and other related parts in the embodiments related to FIG. 2 and FIG. 4A, which will not be repeated here.

At S4302, first indication information is sent, in which the first indication information indicates a position of a starting frequency domain resource unit of a frequency domain resource for UL transmission within the UL subband, and a numerical count of frequency domain resource units occupied by the frequency domain resource.

For implementations of S4302, reference may be made to the implementations of S2102 in FIG. 2, the implementations of S4102 in FIG. 4A, and other related parts in the embodiments related to FIG. 2 and FIG. 4A, which will not be repeated here.

In some embodiments, the network device 102 sends the first indication information to the terminal 101, but it is not limited thereto, and may also send the first indication information to another entity.

In an implementation, the first indication information is used for the terminal 101 to determine a target frequency domain resource based on the frequency domain resource indicated by the first indication information and a frequency domain location of the UL subband. For implementations thereof, reference may be made to the implementations of S2103 in FIG. 2 and other related parts in the embodiments related to FIG. 2, which will not be repeated here.

The communication method involved in the embodiments of the present disclosure may include at least one of S4301 to S4302. For example, S4302 may be implemented as an independent embodiment, a combination of S4301 and S4302 may be implemented as an independent embodiment, and so on, but it is not limited thereto.

In some embodiments, S4301 may be performed, and one or more of these steps may be omitted or substituted in different embodiments.

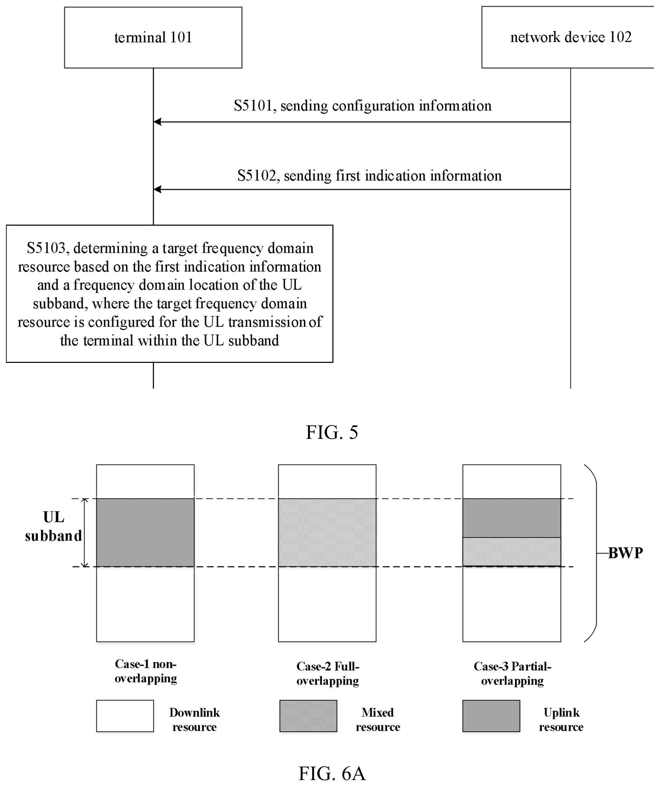

FIG. 5 is a flowchart of a method for resource indication according to an embodiment of the present disclosure. As shown in FIG. 5, the method involved in an embodiment of the present disclosure is applicable to the communication system 100, and includes steps of S5101 to S5103.

At S5101, a network device sends configuration information to a terminal, in which the configuration information configures a UL BWP of the terminal and a UL subband of the terminal.

At S5102, the network device sends first indication information to the terminal, in which the first indication information indicates a frequency domain resource used by the terminal for UL transmission.

At S5103, the terminal determines a target frequency domain resource based on the first indication information and a frequency domain location of the UL subband, in which the target frequency domain resource is configured for the UL transmission of the terminal within the UL subband.

For implementations of S5101, S5102, and S5103, reference may be made to steps in any one embodiment or any multiple embodiments in the above embodiments of FIG. 2, FIG. 3A to FIG. 3C, FIG. 4A to FIG. 4C, and other related parts in the embodiments related to FIG. 2, FIG. 3A to FIG. 3C, FIG. 4A to FIG. 4C.

In some embodiments, the above methods may include the methods described in the above embodiments at the communication system side, the terminal side, the network device side, etc., which will not be repeated here.

The communication method involved in the embodiments of the present disclosure may include at least one of S5101 to S5103. For example, S5103 may be implemented as an independent embodiment, a combination of S5102 and S5103 may be implemented as an independent embodiment, a combination of S5101, S5102, and S5103 may be implemented as an independent embodiment, and so on, but it is not limited thereto.

In the implementations or embodiments, in case of no contradiction, the steps may be independent, arbitrarily combined, or exchanged in order. Implementations or examples may be arbitrarily combined, and may be arbitrarily combined with any steps in other implementations or other embodiments.

The following is an example introduction to the method described in various embodiments above.

### Embodiment 1:

It is assumed that the terminal is a Rel-18 and subsequent version terminal, which has a half-duplex capability or an FD capability, which is not limited by the present disclosure. It is assumed that the network device side performs FD operation in a DL slot of a time division duplexing (TDD) frequency band, i.e., simultaneously scheduling DL data and UL data. When performing the FD operation, the network device side adopts one of the following methods, as shown in FIG. 6A, which is also not limited by the present disclosure: a frequency domain resource used for DL transmission and a frequency domain resource used for UL transmission in the DL slot are independent of each other and do not overlap; a frequency domain resource used for DL transmission and a frequency domain resource used for UL transmission in the DL slot fully overlap; and a frequency domain resource used for DL transmission and a frequency domain resource used for UL transmission in the DL slot partially overlap.

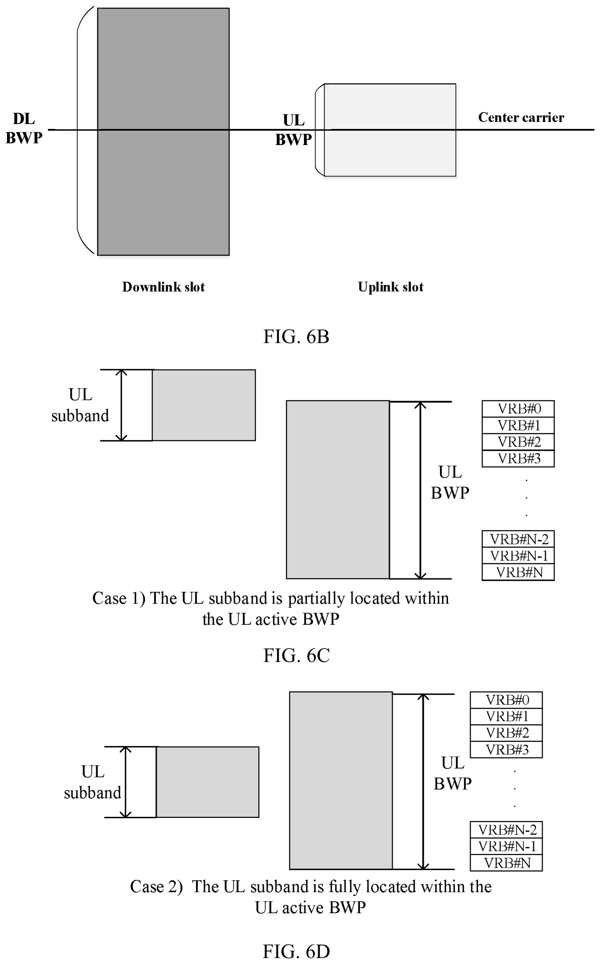

It is assumed that TDD UL-DL configuration of a current system is DDDDDDSUUU (configuration for time domain resources of DL and UL), and a bandwidth of the DL BWP in the DL slot is different from a bandwidth of the UL BWP in the UL slot. For a TDD frequency band, a center carrier of the DL BWP and a center carrier of the UL BWP need to be aligned. For example, FIG. 6B is an example of a configuration of the DL BWP and the UL BWP.

In this embodiment, it is assumed that the network device side schedules UL transmission for an SBFD-aware UE via DCI format 0-0, DCI format 0-1, DCI format 0-2, DCI format 0-3, or any other DCI used for scheduling the UL transmission. The UL transmission may be within a UL subband of an SBFD slot, or within an active UL BWP of a non-SBFD slot, which is not limited by the present disclosure.

In this embodiment, an FDRA field in the DCI for UL scheduling is determined according to an active UL BWP, or determined according to an initial UL BWP. That is, the DCI format for scheduling the UL transmission has a determined size and does not change due to different slot types where scheduled UL transmission is located.

In this embodiment, it is assumed that a frequency domain resource allocation type of the UL transmission is RA type 1, that is, the network device indicates a VRB for UL transmission via the FDRA field in the DCI for scheduling the UL transmission. In this embodiment, it is assumed that the VRB group is still determined according to a size of the active BWP. Two examples of frequency domain resource allocation may be as shown in FIG. 6C and FIG. 6D. That is, regardless of a relative relationship between the UL subband and the active UL BWP, granularity and a numerical count of VRBs are determined according to the active UL BWP. Certainly, the granularity indicated by the FDRA field may be per VRB or per VRB group, which is not limited by the present disclosure. In the examples described below, it is assumed that resource granularity indicated by the network device is per VRB.

In this embodiment, the terminal may determine its resource allocation situation on the UL subband according to the following method.

The RIV indicated by the FDRA field carried in the DCI for scheduling the UL transmission is still parsed within a range of the UL BWP, that is, S and L indicated by the RIV are S and L within the range of the UL BWP, where S indicates a start position of the frequency domain resource, and L indicates a length of the frequency domain resource.

Taking frequency domain resource allocation situations shown in FIG. 6C and FIG. 6D as examples, it is assumed that the active UL BWP includes 20 VRBs (VRB#0-VRB#19), and it is assumed that the network device schedules the UL transmission of the terminal on the UL subband within the SBFD slot.

As an example, the UL subband is partially located within the UL BWP, as shown in case 1 in FIG. 6C. It is assumed that the FDRA field in the DCI indicates that resources for the UL transmission are VRB#0-VRB#2. The terminal determines, according to the indication, a resource position for the UL transmission within the UL subband, which is a VRB where the UL subband overlaps with VRB#0-VRB#2.

As another example, the UL subband is fully located within the UL BWP, as shown in case 2 in FIG. 6D. It is assumed that the FDRA field in the DCI indicates that resources for the UL transmission are VRB#4-VRB#5. The terminal determines, according to the indication, a resource position for the UL transmission within the UL subband, which includes a VRB where the UL subband overlaps with VRB#4-VRB#5.

Furthermore, the terminal considers that once the frequency domain resource indicated by the FDRA field exceeds the frequency domain range of the UL subband, only resources included within the UL subband are used for the corresponding UL transmission.

### Embodiment 2:

It is assumed that the terminal is a Rel-18 and subsequent version terminal, which has a half-duplex capability or an FD capability, which is not limited by the present disclosure. It is assumed that the network device side performs FD operation in a DL slot of a time division duplexing (TDD) frequency band, i.e., simultaneously scheduling DL data and UL data. When performing the FD operation, the network device side adopts one of the following methods, as shown in FIG. 6A, which is also not limited by the present disclosure: a frequency domain resource used for DL transmission and a frequency domain resource used for UL transmission in the DL slot are independent of each other and do not overlap; a frequency domain resource used for DL transmission and a frequency domain resource used for UL transmission in the DL slot fully overlap; and a frequency domain resource used for DL transmission and a frequency domain resource used for UL transmission in the DL slot partially overlap.

It is assumed that TDD UL-DL configuration of a current system is DDDDDDSUUU (configuration for time domain resources of DL and UL), and a bandwidth of the DL BWP in the DL slot is different from a bandwidth of the UL BWP in the UL slot. For a TDD frequency band, a center carrier of the DL BWP and a center carrier of the UL BWP need to be aligned. For example, FIG. 6B is an example of a configuration of the DL BWP and the UL BWP.

In this embodiment, it is assumed that the network device side schedules UL transmission for an SBFD aware UE via DCI format 0-0, DCI format 0-1, DCI format 0-2, DCI format 0-3, or any other DCI used for scheduling the UL transmission. The UL transmission may be within a UL subband of an SBFD slot, or within an active UL BWP of a non-SBFD slot, which is not limited by the present disclosure.

In this embodiment, an FDRA field in the DCI for UL scheduling is determined according to an active UL BWP, or determined according to an initial UL BWP. In summary, the DCI format for scheduling the UL transmission has a determined size and does not change due to different slot types where scheduled UL transmission is located.

In this embodiment, it is assumed that a frequency domain resource allocation type of the UL transmission is RA type 1, that is, the network device indicates a VRB for UL transmission via the FDRA field in the DCI for scheduling the UL transmission. In this embodiment, it is assumed that the VRB group is still determined according to a size of the active BWP. Two examples of frequency domain resource allocation may be as shown in FIG. 6C and FIG. 6D. That is, regardless of a relative relationship between the UL subband and the active UL BWP, granularity and the numerical count of VRBs are determined according to the active UL BWP. Certainly, the granularity indicated by the FDRA field may be per VRB or per VRB group, which is not limited by the present disclosure. In the examples described below, it is assumed that the resource granularity indicated by the network device is per VRB.

In this embodiment, the terminal may determine its resource allocation situation on the UL subband according to the following method.

The RIV indicated by the FDRA field carried in the DCI is still parsed within a range of the UL subband, that is, S and L indicated by the RIV are S and L within the range of the UL subband, where S indicates a start position of the frequency domain resource, and L indicates a length of the frequency domain resource.

Taking frequency domain resource allocation situations shown in FIG. 6C and FIG. 6D as examples, it is assumed that the active UL BWP includes 20 VRBs (VRB#0-VRB#19), and it is assumed that the network device schedules the UL transmission of the terminal on the UL subband within the SBFD slot.

As an example, the UL subband is fully located within the UL BWP, as shown in case 2 in FIG. 6D. It is assumed that the UL subband includes 3 VRBs (VRB#3-VRB#5). It is assumed that S indicated by the FDRA field in the DCI is 1 and L is 3. When being parsed within the range of the UL subband, the indicated resources for the UL transmission are VRB#4-VRB#6. The terminal determines, according to the indication, the resource position for the UL transmission within the UL subband, which includes a VRB where the UL subband overlaps with VRB#4-VRB#6.

Furthermore, the terminal considers that once the frequency domain resource indicated by the FDRA field exceeds the frequency domain range of the UL subband, only resources included within the UL subband are used for the corresponding UL transmission.

The embodiments of the present disclosure also provide an apparatus for implementing any one of the above methods. For example, an apparatus is provided, including units or modules for implementing steps executed by the terminal in any one of the above methods. For another example, another apparatus is provided, including units or modules for implementing steps executed by the network device (e.g., an access network device, a core network function node, a core network device, etc.) in any one of the above methods.

It should be understood that the division of units or modules in the above apparatuses is merely a division of logical functions. In actual implementations, the units may be fully or partially integrated into a single physical entity or may be physically separated. In addition, the units or modules in the apparatus may be implemented in a form of a processor invoking software. For example, the apparatus includes a processor, which is connected to a memory for storing instructions. The processor invokes the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in a form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units are realized by designing logical relationships among components in the circuit. In another implementation, the hardware circuit may be implemented using a programmable logic device (PLD). Taking a field programmable gate array (FPGA) as an example, the FPGA may include a large numerical count of logic gate circuits, and connection relationships among the logic gate circuits are configured by configuration files to realize the functions of some or all of the units or modules. All units or modules of the above apparatus may be fully implemented in a form of the processor invoking software, or fully implemented in a form of the hardware circuit, or partially implemented in a form of the processor invoking software and the remaining part implemented in a form of the hardware circuit.

In the embodiments of the present disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of some or all of the units or the modules. In addition, the hardware circuit may be designed specifically for artificial intelligence and may be understood as an ASIC, such as a neural network processing unit (NPU), a tensor processing unit (TPU), or a deep learning processing unit (DPU).

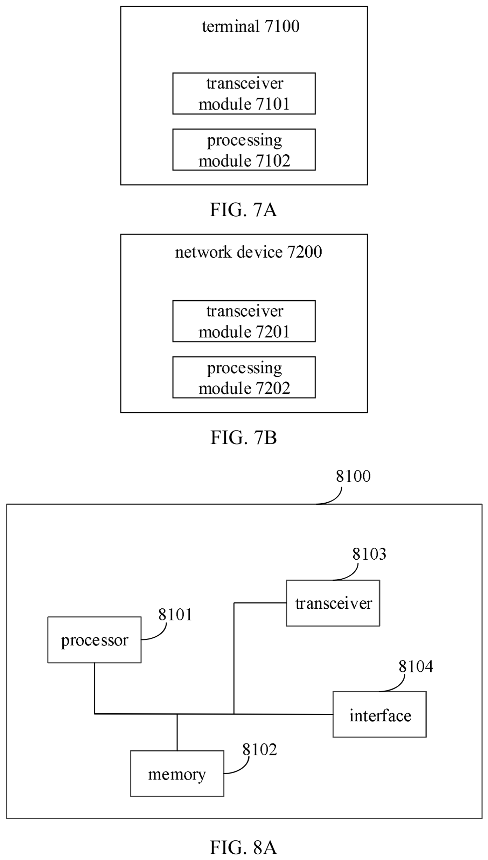

FIG. 7A is a block diagram of a terminal according to an embodiment of the present disclosure. As shown in FIG. 7A, a terminal 7100 may include at least one of: a transceiver module 7101 or a processing module 7102. In some embodiments, the transceiver module is configured to receive configuration information sent by a network device, in which the configuration information configures a UL BWP of the terminal and a UL subband of the terminal; the transceiver module is further configured to receive first indication information sent by the network device, in which the first indication information indicates a frequency domain resource used by the terminal for UL transmission; and the processing module is configured to determine a target frequency domain resource based on the first indication information and a frequency domain location of the UL subband, in which the target frequency domain resource is configured for the UL transmission of the terminal within the UL subband.

In an implementation, the transceiver module is configured to perform at least one of communication steps such as sending and/or receiving executed by the terminal 101 in any one of the above methods (for example, S2101, or S2102, but not limited thereto), which will not be repeated here. In an implementation, the processing module is configured to perform at least one of other steps executed by the terminal 101 in any one of the above methods (for example, S2103, but not limited thereto), which will not be repeated here.

FIG. 7B is a block diagram of a network device according to an embodiment of the present disclosure. As shown in FIG. 7B, a network device 7200 may include at least one of: a transceiver module 7201 or a processing module 7202. In some embodiments, the transceiver module is configured to send configuration information to a terminal, in which the configuration information configures a UL BWP of the terminal and a UL subband of the terminal; the transceiver module is further configured to send first indication information to the terminal, in which the first indication information indicates a frequency domain resource used by the terminal for UL transmission, in which the first indication information and a frequency domain location of the UL subband of the terminal are used by the terminal to determine a target frequency domain resource, and the target frequency domain resource is configured for the UL transmission of the terminal within the UL subband.

In an implementation, the transceiver module is configured to perform at least one of communication steps such as sending and/or receiving executed by the network device 102 in any one of the above methods (for example, S2101, or S2102, but not limited thereto), which will not be repeated here.

In some embodiments, the transceiver module may include a sending module and/or a receiving module. The sending module and the receiving module may be separate or integrated together. In an implementation, the transceiver module may be interchanged with a transceiver.

In some embodiments, the processing module may be one module or may include a plurality of sub-modules. In an implementation, the plurality of sub-modules respectively execute all or part of the steps required to be executed by the processing module. In an implementation, the processing module may be interchanged with a processor.

FIG. 8A is a block diagram of a communication device 8100 according to the embodiments of the present disclosure. The communication device 8100 may be a network device (for example, an access network device, a core network device, etc.), or may be a terminal (for example, a user equipment, etc.), or may be a chip, a chip system, or a processor that supports a network device to implement any one of the above methods, or may be a chip, a chip system, or a processor that supports a terminal to implement any one of the above methods. The communication device 8100 may be used to implement the methods described in the above method embodiments. For details, reference may be made to the descriptions in the above method embodiments.

As shown in FIG. 8A, the communication device 8100 includes one or more processors 8101. The processor 8101 may be a general purpose processor or a dedicated processor, such as, a baseband processor and a central processor. The baseband processor is used for processing communication protocols and communication data. The central processor is used for controlling the communication device (e.g., a base station, a baseband chip, a terminal, a terminal chip, a DU, or a CU), executing programs, and processing data of the programs. The communication device 8100 is configured to perform any one of the above methods.

In some embodiments, the communication device 8100 further includes one or more memories 8102 for storing instructions. In an implementation, all or some of the memories 8102 may also be located outside the communication device 8100.

In some embodiments, the communication device 8100 further includes one or more transceivers 8103. When the communication device 8100 includes one or more transceivers 8103, the transceiver 8103 performs at least one of communication steps such as sending and/or receiving in the above method (for example, S2101, or S2102, but not limited thereto), and the processor 8101 performs at least one of other steps (for example, S2103, but not limited thereto).

In some embodiments, the transceiver may include a receiver and/or a transmitter, which may be separate or integrated. In an implementation, terms such as transceiver, transceiver unit, transceiver machine, transceiver circuit, etc. may be used interchangeably; terms such as transmitter, sending unit, transmitter machine, sending circuit, etc. may be used interchangeably; and terms such as receiver, receiving unit, receiver machine, receiving circuit, etc. may be used interchangeably.

In an implementation, the communication device 8100 further includes one or more interface circuits 8104. The interface circuit 8104 is connected to the memory 8102 and may be used to receive signals from the memory 8102 or other devices, or send signals to the memory 8102 or other devices. For example, the interface circuit 8104 may read instructions stored in the memory 8102 and send the instructions to the processor 8101.

The communication device 8100 in the description of the above embodiments may be a network device or a terminal, but the scope of the communication device 8100 described in the disclosure is not limited thereto, and the structure of the communication device 8100 may not be limited by FIG. 8A. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

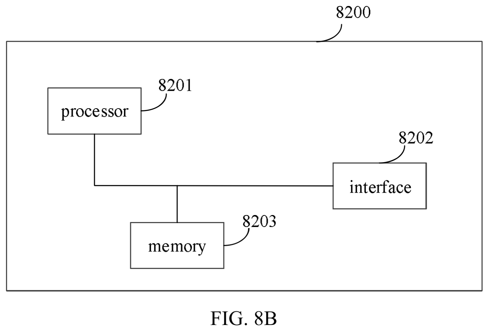

FIG. 8B is a block diagram of a chip 7200 according to the embodiments of the present disclosure. For a case where the communication device 8100 may be a chip or chip system, reference may be made to the block diagram of the chip 8200 shown in FIG. 8B, but it is not limited thereto.

The chip 8200 includes one or more processors 8201, and the processor 8201 is configured to implement any one of the above methods.

In some embodiments, the chip 8200 further includes one or more interface circuits 8202. The interface circuit 8202 is connected to a memory 8203 and may be used to receive signals from the memory 8203 or other devices, or send signals to the memory 8203 or other devices. For example, the interface circuit 8202 may read instructions stored in the memory 8203 and send the instructions to the processor 8201.

In some embodiments, the interface circuit 8202 performs at least one of communication steps (such as S2101, or S2102, but not limited thereto) in the above method, and the processor 8201 performs at least one of other steps (such as S2103, but not limited thereto).

In an implementation, terms such as interface circuit, interface, transceiver pin, transceiver, etc. may be used interchangeably.

In some embodiments, the chip 8200 further includes one or more memories 8203 for storing instructions. In an implementation, all or some of the memories 8203 may be located outside the chip 8200.

The present disclosure also provides a storage medium for storing instructions. When the instructions are running on the communication device 8100, the communication device 8100 is caused to implement any one of the above methods. In an implementation, the storage medium is an electronic storage medium. In an implementation, the storage medium is a computer-readable storage medium, but it may also be a storage medium readable by other devices. In an implementation, the storage medium may be a non-transitory storage medium, but it may also be a transitory storage medium.

The present disclosure also provides a program product. When the program product is executed by the communication device 8100, the communication device 8100 is caused to implement any one of the above methods. In an implementation, the program product is a computer program product.

The present disclosure also provides a computer program. When the computer program is executed on a computer, the computer is caused to implement any one of the above methods.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium may be a magnetic medium (such as a floppy disk, a hard disk and a magnetic tape), an optical medium (such as a digital video disk (DVD)), or a semiconductor medium (such as a solid state disk (SSD)).

Those skilled in the related art may realize that, in combination with units and algorithm steps of the examples described in embodiments of the present disclosure, may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, for a specific working process of a system, an apparatus and a unit described above reference may be made to a corresponding process in the above method embodiments, which will not be repeated here.

The above are only implementations of the disclosure. However, the protection scope of the disclosure is not limited here. Changes and substitutions that may be easily considered by those skilled in the art shall be included within the protection scope of the present disclosure. Therefore, the protection scope of the disclosure shall be subject to the protection scope of claims.

## Claims

1. A method for resource indication, performed by a terminal, comprising:
receiving configuration information sent by a network device, wherein the configuration information configures an uplink bandwidth part (UL BWP) of the terminal and an uplink (UL) subband of the terminal;
receiving first indication information sent by the network device, wherein the first indication information indicates a frequency domain resource used by the terminal for UL transmission; and
determining a target frequency domain resource based on the first indication information and a frequency domain location of the UL subband, wherein the target frequency domain resource is configured for the UL transmission of the terminal within the UL subband.

2. The method of claim 1, wherein
a length of the first indication information is determined according to an active UL BWP; or
a length of the first indication information is determined according to an initial UL BWP.

3. The method of claim 1 or 2, wherein
the first indication information indicates a position of a starting frequency domain resource unit of the frequency domain resource for the UL transmission within the UL BWP, and a numerical count of frequency domain resource units occupied by the frequency domain resource for the UL transmission; and
the target frequency domain resource is a frequency domain resource where the frequency domain resource for the UL transmission indicated by the first indication information overlaps with the UL subband of the terminal.

4. The method of claim 1 or 2, wherein
the first indication information indicates a position of a starting frequency domain resource unit of the frequency domain resource for the UL transmission within the UL subband, and a numerical count of frequency domain resource units occupied by the frequency domain resource for the UL transmission; and
the target frequency domain resource is a frequency domain resource where the frequency domain resource for the UL transmission indicated by the first indication information overlaps with the UL subband of the terminal.

5. The method of any one of claims 1 to 4, wherein the first indication information is a resource indicate value (RIV).

6. The method of any one of claims 1 to 5, wherein the first indication information is comprised in downlink control information (DCI).

7. The method of any one of claims 1 to 6, wherein a resource allocation type for the UL transmission is a first type.

8. The method of any one of claims 1 to 7, wherein the UL subband is located within a subband full duplex (SBFD) slot.

9. A method for resource indication, performed by a network device, comprising:
sending configuration information to a terminal, wherein the configuration information configures an uplink bandwidth part (UL BWP) of the terminal and an uplink (UL) subband of the terminal;
sending first indication information to the terminal, wherein the first indication information indicates a frequency domain resource used by the terminal for UL transmission,
wherein the first indication information and a frequency domain location of the UL subband of the terminal are used by the terminal to determine a target frequency domain resource, and the target frequency domain resource is configured for the UL transmission of the terminal within the UL subband.

10. The method of claim 9, wherein
a length of the first indication information is determined according to an active UL BWP; or
a length of the first indication information is determined according to an initial UL BWP.

11. The method of claim 9 or 10, wherein
the first indication information indicates a position of a starting frequency domain resource unit of the frequency domain resource for the UL transmission within the UL BWP, and a numerical count of frequency domain resource units occupied by the frequency domain resource for the UL transmission; and
the target frequency domain resource is a frequency domain resource where the frequency domain resource for the UL transmission indicated by the first indication information overlaps with the UL subband of the terminal.

12. The method of claim 9 or 10, wherein
the first indication information indicates a position of a starting frequency domain resource unit of the frequency domain resource for the UL transmission within the UL subband, and a numerical count of frequency domain resource units occupied by the frequency domain resource for the UL transmission; and
the target frequency domain resource is a frequency domain resource where the frequency domain resource for the UL transmission indicated by the first indication information overlaps with the UL subband of the terminal.

13. The method of any one of claims 9 to 12, wherein the first indication information is a resource indicate value (RIV).

14. The method of any one of claims 9 to 13, wherein the first indication information is comprised in downlink control information (DCI).

15. The method of any one of claims 9 to 14, wherein a resource allocation type for the UL transmission is a first type.

16. The method of any one of claims 9 to 15, wherein the UL subband is located within a subband full duplex (SBFD) slot.

17. A method for resource indication, comprising:
sending, by a network device, configuration information to a terminal, wherein the configuration information configures an uplink bandwidth part (UL BWP) of the terminal and an uplink (UL) subband of the terminal;
sending, by the network device, first indication information to the terminal, wherein the first indication information indicates a frequency domain resource used by the terminal for UL transmission; and
determining, by the terminal, a target frequency domain resource based on the first indication information and a frequency domain location of the UL subband, wherein the target frequency domain resource is configured for the UL transmission of the terminal within the UL subband.

18. The method of claim 17, wherein
a length of the first indication information is determined according to an active UL BWP; or
a length of the first indication information is determined according to an initial UL BWP.

19. The method of claim 17 or 18, wherein
the first indication information indicates a position of a starting frequency domain resource unit of the frequency domain resource for the UL transmission within the UL BWP, and a numerical count of frequency domain resource units occupied by the frequency domain resource for the UL transmission; and
the target frequency domain resource is a frequency domain resource where the frequency domain resource for the UL transmission indicated by the first indication information overlaps with the UL subband of the terminal.

20. The method of claim 17 or 18, wherein
the first indication information indicates a position of a starting frequency domain resource unit of the frequency domain resource for the UL transmission within the UL subband, and a numerical count of frequency domain resource units occupied by the frequency domain resource for the UL transmission; and
the target frequency domain resource is a frequency domain resource where the frequency domain resource for the UL transmission indicated by the first indication information overlaps with the UL subband of the terminal.

21. The method of any one of claims 17 to 20, wherein the first indication information is a resource indicate value (RIV).

22. The method of any one of claims 17 to 21, wherein the first indication information is comprised in downlink control information (DCI).

23. The method of any one of claims 17 to 22, wherein a resource allocation type for the UL transmission is a first type.

24. The method of any one of claims 17 to 23, wherein the UL subband is located within a subband full duplex (SBFD) slot.

25. A terminal, comprising:
a transceiver module, configured to receive configuration information sent by a network device, wherein the configuration information configures an uplink bandwidth part (UL BWP) of the terminal and an uplink (UL) subband of the terminal;
the transceiver module, further configured to receive first indication information sent by the network device, wherein the first indication information indicates a frequency domain resource used by the terminal for UL transmission; and
a processing module, configured to determine a target frequency domain resource based on the first indication information and a frequency domain location of the UL subband, wherein the target frequency domain resource is configured for the UL transmission of the terminal within the UL subband.

26. A network device, comprising:
a transceiver module, configured to send configuration information to a terminal, wherein the configuration information configures an uplink bandwidth part (UL BWP) of the terminal and an uplink (UL) subband of the terminal;
the transceiver module, further configured to send first indication information to the terminal, wherein the first indication information indicates a frequency domain resource used by the terminal for UL transmission,
wherein the first indication information and a frequency domain location of the UL subband of the terminal are used by the terminal to determine a target frequency domain resource, and the target frequency domain resource is configured for the UL transmission of the terminal within the UL subband.

27. A terminal, comprising:
one or more processors,
wherein the terminal is configured to implement the method for resource indication of any one of claims 1 to 8.

28. A network device, comprising:
one or more processors,
wherein the network device is configured to implement the method for resource indication of any one of claims 9 to 16.

29. A communication system, comprising a terminal and a network device, wherein the terminal is configured to implement the method for resource indication of any one of claims 1 to 8, and the network device is configured to implement the method for resource indication of any one of claims 9 to 16.

30. A storage medium, for storing instructions that, when running on a communication device, cause the communication device to implement the method for resource indication of any one of claims 1 to 8 or claims 9 to 16.
